# EUROPEAN PATENT APPLICATION

(11) **EP 4 679 467 A2**
(43) Date of publication of application: **14.01.2026**
(21) Application number: 25181374.7
(22) Date of filing: 06.06.2025
(51) Int. Cl.: H01G 11/24, H01G 11/28, H01G 11/32

(54) **POSITIVE-ELECTRODE SHEET FOR CAPACITOR, MANUFACTURING METHOD THEREOF, AND ULTRATHIN SUPERCAPACITOR**

(30) Priority: 18.06.2024 CN 202410790346
(71) Applicant: Eve Energy Co., Ltd., Huizhou, Guangdong 516006 (CN)
(72) Inventor: YIN, Hao, Huizhou (CN); XU, Feichuan, Huizhou (CN); LIN, Kangshou, Huizhou (CN); CAO, Lang, Huizhou (CN)
(74) Representative: Herrero & Asociados, S.L.

(57) **Abstract**

A positive-electrode sheet for a capacitor includes a first active substance layer (1). The first active substance layer comprises a positive-electrode active material, a carbon electrode material, a positive-electrode conductive agent, and a positive-electrode binder. A method of forming a positive electrode. An ultrathin supercapacitor.

## Description

### TECHNICAL FIELD

The present disclosure relates to the field of capacitors, and in particular to a positive-electrode sheet for capacitor, a manufacturing method thereof, and an ultrathin supercapacitor.

### BACKGROUND

In the art, a supercapacitor substantially has a winding structure, having a relatively large size. It may be more difficult to design and manufacture a small-sized supercapacitor, and manufacturing costs thereof are increased. Especially for the market of ultrathin supercapacitors, promotion of the supercapacitor having a larger thickness is limited. In addition, a specific energy of the supercapacitor is low, and when a small-sized supercapacitor is to be prepared, a capacitance thereof is low, and self-discharging thereof is large, and therefore, a duration time thereof is reduced.

The Chinese patent publication No. CN106783223A discloses a winding all-solid-state supercapacitor and a method for preparing the same. The winding all-solid-state supercapacitor includes a bottom metal foil, a bottom metal foil coating, a top metal foil, a top metal foil coating, a winding shaft core, a case, a conductive silver paste coating, an electrode lead, and a tape. The bottom metal foil, the bottom metal foil coating, the top metal foil, the top metal foil coating, the winding shaft core, and the tape cooperatively form a winding supercapacitor core.

The Chinese patent publication No. CN101937774A discloses a method of preparing a winding supercapacitor. The method includes: (1) taking a carbon nanotube film prepared by a direct growth method as an electrode material; (2) cutting the carbon nanotube film into a plurality of small pieces of carbon nanotube film; (3) spreading an elongated separator flatly in a volatile organic solvent; (4) spreading the plurality of small pieces of carbon nanotube film flatly, from end to end, onto the separator; waiting for the organic solvent on the separator on which the carbon nanotube film are applied to be fully volatized; 5) winding the separator and encapsulating the wound separator to obtain the winding supercapacitor.

A thickness of the winding supercapacitor in the art cannot meet requirements of ultrathin terminal products, and a technical problem of the lower duration time, caused by a low specific capacity, of the winding supercapacitor in the art is not negligible.

### SUMMARY

The present disclosure provides a positive-electrode sheet for capacitor, a manufacturing method thereof, and an ultrathin supercapacitor. The ultrathin supercapacitor has a high specific energy and a low self-discharging, ensuring long duration time and allowing the terminal product to be miniaturized and ultrathin.

In a first aspect, the present disclosure provides a positive-electrode sheet for a capacitor, including a first active substance layer. The first active substance layer includes a positive-electrode active material, a carbon electrode material, a positive-electrode conductive agent, and a positive-electrode binder.

In the present disclosure, the carbon electrode material is added to the positive-electrode active material to form a single sheet structure to construct an electric double-layer structure for the supercapacitor. Advantages of the supercapacitor and a lithium-ion battery are combined with each other, a better multiplication output capability is ensured, and the specific energy is effectively improved.

In some embodiments, the carbon electrode material is a porous carbon electrode material.

In some embodiments, the porous carbon electrode material includes porous activated carbon and/or biomass carbon.

In some embodiments, the porous carbon electrode material has a specific surface area of 1400 m²/g to 2000 m²/g, such as 1400m²/g, 1450m²/g, 1500m²/g, 1550m²/g, 1600m²/g, 1650m²/g, 1700m²/g, 1800m²/g, 1900m²/g, 1950m²/g, or 2000m²/g. The specific surface area is not limited to the listed values, and any other unlisted values within the range are also applicable.

In some embodiments, the carbon electrode material has a median particle size of 3µm to 10 µm, such as 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, or 10 µm. The median particle size is not limited to the listed values, and any other unlisted values within the range are also applicable.

In the present disclosure, the porous carbon electrode material, having a high specific surface area, is added to the positive-electrode sheet of the capacitor to form the electric double-layer structure, such that an energy density of the capacitor is improved.

In some embodiments, a total mass of the first active substance layer is recorded as 100%, a mass fraction of the positive-electrode active material is 50% to 94%, such as 50%, 55%, 56%, 60%, 65%, 70%, 75%, 80%, 85%, 90%, 92% or 94%. The mass fraction is not limited to the listed values, and any other unlisted values within the range are also applicable.

Amass fraction of the positive-electrode conductive agent is 1% to 10%, such as 1%, 2%, 3%, 4%, 5%, 6%, 7%, 8%, 9%, or 10%. The mass fraction is not limited to the listed values, and any other unlisted values within the range are also applicable.

A mass fraction of the positive-electrode binder is 2% to 10%, such as 2%, 3%, 4%, 5%, 6%, 7%, 8%, 9%, or 10%. The mass fraction is not limited to the listed values, and any other unlisted values within the range are also applicable.

A mass fraction of the carbon electrode material is 3% to 50%, such as 3%, 5%, 10%, 12%, 15%, 18%, 20%, 25%, 30%, 35%, 36%, 40%, 43%, 45%, 48%, or 50%. The mass fraction is not limited to the listed values, and any other unlisted values within the range are also applicable.

In some embodiments, the positive-electrode active material includes a lithium-containing compound. The lithium-containing compound includes any one or a combination of at least two of: a layered transition metal oxide, a polyanionic compound, and a spinel compound.

In some embodiments, the layered transition metal oxide includes LiMO₂; the M includes any one or a combination of at least two of: Co, Ni and Mn.

In some embodiments, the polyanionic compound includes LiFePO₄ and/or (LiMnₓFe₁₋ₓPO₄), the x is 0.1 to 0.6; such as 0.1, 0.12, 0.15, 0.18, 0.2, 0.25, 0.28, 0.3, 0.35, 0.36, 0.4, 0.45, 0.5, 0.55, 0.58, or 0.6. The x is not limited to the listed values, and any other unlisted values within the range are also applicable.

In some embodiments, the spinel compound includes lithium manganate.

In some embodiments, the positive-electrode conductive agent includes any one or a combination of at least two of: conductive carbon black, carbon nanotubes, graphene, and a carbon fibre conductive agent. Typical and non-limited combinations include: a combination of conductive carbon black and carbon nanotubes, a combination of carbon nanotubes and graphene, a combination of graphene and the carbon fibre conductive agent; a combination of conductive carbon black, carbon nanotubes and graphene; a combination of carbon nanotubes, graphene and the carbon fibre conductive agent, and so on.

In some embodiments, the positive-electrode conductive agent has a specific surface area of 40 m²/g to 100 m²/g, such as 40 m²/g, 45 m²/g, 50 m²/g, 55 m²/g, 60m²/g, 65m²/g, 70m²/g, 75m²/g, 80m²/g, 85m²/g, 90m²/g, 95m²/g, or 100m²/g. The specific surface area is not limited to the listed values, and any other unlisted values within the range are also applicable.

In some embodiments, the positive-electrode conductive agent has a median particle size of 10nm to 100 nm, such as 10nm, 15nm, 20nm, 30nm, 40nm, 50nm, 60nm, 70nm, 80nm, 90nm or 100nm. The median particle size is not limited to the listed values, and any other unlisted values within the range are also applicable.

In some embodiments, the positive-electrode binder includes any one or a combination of at least two of: polyvinylidene fluoride, polytetrafluoroethylene, and polyacrylic acid. Typical and non-limited combinations include: a combination of polyvinylidene fluoride and polytetrafluoroethylene; a combination of polyvinylidene fluoride and polyacrylic acid; polyvinylidene fluoride; a combination of polyvinylidene fluoride and polyacrylic acid, a combination of polyvinylidene fluoride and polyacrylic acid, and so on.

The positive-electrode binder in the present embodiment ensures a bonding force inside the positive-electrode material, facilitating structural strength to be improved, and ensuring a molding effect.

In some embodiments, the positive-electrode sheet for the capacitor further includes a positive-electrode collector; the first active substance layer is arranged on at least one side surface of the positive-electrode collector.

In some embodiments, the positive-electrode collector has a thickness of 6µm to 20 µm, such as 6µm, 8µm, 9µm, 10µm, 11µm, 12µm, 13µm, 14µm, 15µm, 16µm, 17µm, 18µm, 19µm, or 20µm. The thickness is not limited to the listed values, and any other unlisted values within the range are also applicable.

In some embodiments, the positive-electrode collector includes an aluminium foil or an aluminium mesh.

In a second aspect, the present disclosure provides a method of manufacturing the positive-electrode sheet for the capacitor according to the first aspect. The method includes: mixing the positive-electrode active material, the carbon electrode material, the positive-electrode conductive agent and the positive-electrode binder to obtain a positive-electrode material; and processing and molding the positive-electrode material to obtain the first active substance layer.

The present disclosure does not specifically limit a processing and molding method of the positive-electrode material. Any process or combination of processes commonly used in the art that can process the positive-electrode material to form a sheet-shaped active substance layer can be applied herein. Exemplarily, the processing and molding may be any one or a combination of at least two of: deposition, hot pressing, coating or rolling. Any ordinary skilled person in the art may determine various processing and molding methods according to the nature of the positive-electrode material.

In some embodiments, the mixing includes dry mixing or wet mixing.

In some embodiments, when a thickness of the positive-electrode sheet for the capacitor is greater than 200 µm, the dry mixing is performed; and when the thickness of the positive-electrode sheet for the capacitor is less than or equal to 200 µm, the wet mixing is performed.

In some embodiments, the mixing method is determined based on the thickness of the positive-electrode sheet.

In some embodiments, the method further includes providing the positive-electrode collector and compounding the positive-electrode material with the positive-electrode collector to form the first active substance layer on at least one side surface of the positive-electrode collector.

In some embodiments, the compounding includes: heating and compressing the positive-electrode material to a surface of the positive-electrode collector, or processing the positive-electrode material into a positive-electrode paste and then coating the positive-electrode paste on the surface of the positive-electrode collector to form the first active substance layer.

In some embodiments, the heating and compressing is performed at a temperature of 100°C to 200°C, such as 100°C, 110°C, 120°C, 130°C, 140°C, 150°C, 160°C, 170°C, 180°C, 190°C or 200°C. The temperature is not limited to the listed values, and any other unlisted values within the range are also applicable.

In some embodiments, mixing the positive-electrode material and a solvent to form the positive-electrode paste, and a mass ratio of the positive-electrode material to the solvent is in a range of 0.4 to 0.8, such as 0.4, 0.42, 0.45, 0.5, 0.53, 0.55, 0.6, 0.62, 0.65, 0.7, 0.72, 0.75 or 0.8. The mass ratio is not limited to the listed values, and any other unlisted values within the range are also applicable.

When the positive-electrode material is made by performing the dry mixing, the heating and compressing operation is performed achieve the compounding operation. When the positive-electrode material is made by performing the wet mixing, the coating operation is performed to achieve the compounding operation. Any ordinary skilled person in the art may determine the operations according to the actual situation. For the method of manufacturing the positive-electrode sheet for the capacitor, following two technical solutions are provided.

In a technical solution I, the positive-electrode active material, the carbon electrode material, the positive-electrode conductive agent, and the positive-electrode binder are added to a mixing device based on a ratio and are stirred sufficiently to obtain positive-electrode material dry powders. The positive-electrode material dry powers is heated and compressed to form a positive-electrode material dry sheet, having a desired thickness. The positive-electrode material dry sheet is adhered to the surface of the positive-electrode collector to obtain the positive-electrode sheet.

In a technical solution II, the positive-electrode binder and a solvent, in a certain ration, are added to a stirring cylinder and are stirred sufficiently to obtain a positive-electrode paste solution. The positive-electrode conductive agent is added to the positive-electrode paste solution. The positive-electrode conductive agent and the positive-electrode paste solution are stirred sufficiently to obtain a conductive paste solution. The positive-electrode active material and the carbon electrode material are added to the conductive paste solution and are stirred sufficiently to obtain a wet paste. The wet paste is coated onto a surface of the positive-electrode collector by a coating device. The positive-electrode collector coated with the wet paste is baked to obtain the positive-electrode sheet.

In a third aspect, the present disclosure provides an ultrathin supercapacitor, including: a case and an upper cover body that is insulated from and connected to the case. The case and the upper cover body cooperatively define a receiving chamber; the positive-electrode sheet, a separator, and a negative-electrode sheet are sequentially laminated inside the receiving chamber; the positive-electrode sheet is connected to the case, and the negative-electrode sheet is at least partially connected to the upper cover body; the positive-electrode sheet is the positive-electrode sheet for the capacitor according to the first aspect or is made by performing the method of manufacturing the positive-electrode sheet for the capacitor according to the second aspect.

Each of the positive-electrode sheet, the separator, and the negative-electrode sheet is a single-layer structure. Compared to a multi-layer laminated sheet or the winding structure in the art, the single-layer structure effectively improves the energy density of the ultrathin supercapacitor, reduces self-discharging of the capacitor in order to ensure a long duration time. **In** addition, reliability and safety of the supercapacitor is improved, the supercapacitor can be disassembled easily, manufacturing the supercapacitor in batch can be achieved easily, miniaturization and ultrathinness of the supercapacitor can be achieved, and the supercapacitor may be applicable to ultrathin terminal products.

**In** some embodiments, the positive-electrode sheet further includes: the positive-electrode collector, the positive-electrode collector is disposed between the case and the first active substance layer.

**In** some embodiments, an electrolyte is filled to an interior of the case.

**In** some embodiments, the case is connected to the upper cover body via an insulating assembly.

In some embodiments, the insulating assembly is an insulating rubber ring.

In some embodiments, the negative-electrode sheet includes a second active substance layer, the second active substance layer includes a negative-electrode active material, a negative-electrode conductive agent, and a negative-electrode binder.

In some embodiments, the negative-electrode sheet further includes a negative-electrode collector, the negative-electrode collector is disposed between the upper cover body and the second active substance layer.

In some embodiments, the negative-electrode collector comprises any one of: a copper foil, a nickel mesh, an aluminium foil or an aluminium mesh.

In some embodiments, the negative-electrode collector has a thickness of 6µm to 20 µm, such as 6µm, 8µm, 9µm, 10µm, 11µm, 12µm, 13µm, 14µm, 15µm, 16µm, 17µm, 18µm, 19µm or 20µm. The thickness is not limited to the listed values, and any other unlisted values within the range are also applicable.

In some embodiments, a total mass of the second active substance layer is recorded as 100%, a mass fraction of the negative-electrode active material is in a range of 80% to 96%, such as 80%, 82%, 84%, 85%, 88%, 90%, 92%, 94%, 95%, or 96%. The mass fraction is not limited to the listed values, and any other unlisted values within the range are also applicable.

In some embodiments, a mass fraction of the negative-electrode conductive agent is in a range of 2% to 10%, such as 2%, 3%, 4%, 5%, 6%, 7%, 8%, 9%, or 10%. The mass fraction is not limited to the listed values, and any other unlisted values within the range are also applicable.

In some embodiments, a mass fraction of the negative-electrode binder is in a range of 2% to 10%, such as 2%, 3%, 4%, 5%, 6%, 7%, 8%, 9%, or 10%. The mass fraction is not limited to the listed values, and any other unlisted values within the range are also applicable.

In some embodiments, the negative-electrode active material comprises lithium titanate and/or a carbon active material, preferably lithium titanate.

In the present embodiments, for the negative-electrode material, the lithium titanate is preferably used as the negative-electrode active material. In this way, multiplication performance and a cycle service life of the ultrathin supercapacitor can be significantly improved. In addition, due to a high voltage plateau, a risk of over-discharging and lithium precipitation does not exist, such that safety of the product is greatly improved.

In some embodiments, the carbon active material includes any one or a combination of at least two of: graphite, soft carbon, hard carbon, and intermediate-phase carbon microspheres. Typical and non-limited combinations include: a combination of graphite and soft carbon; a combination of hard carbon and intermediate phase carbon microspheres; a combination of graphite and hard carbon; a combination of graphite, hard carbon and intermediate-phase carbon microspheres.

In some embodiments, the negative-electrode conductive agent includes any one or a combination of at least two of: conductive carbon black, carbon nanotubes, graphene or a carbon fibre conductive agent. Typical and non-limited combinations include: a combination of conductive carbon black and carbon nanotubes, a combination of carbon nanotubes and graphene, a combination of graphene and the carbon fibre conductive agent; a combination of carbon nanotubes, graphene and the carbon fibre conductive agent; a combination of conductive carbon black, carbon nanotubes and graphene; and so on.

In some embodiments, the negative-electrode binder includes any one or a combination of at least two of: polyvinylidene fluoride, polytetrafluoroethylene, polyacrylic acid, sodium carboxymethylcellulose, and styrene-butadiene rubber. In this way, bonding strength within the negative-electrode binder is ensured, structural strength is improved, and a molding effect is improved.

Exemplarily, a method of manufacturing the negative-electrode sheet has two technical solutions.

In a technical solution I, the negative-electrode active material, the negative-electrode conductive agent, and the negative-electrode binder, in a certain ratio, are added to a mixing device and are stirred sufficiently to obtain negative-electrode material dry powders. The negative-electrode material dry powers is heated and compressed to form a negative-electrode material dry sheet, having a desired thickness. The negative-electrode material dry sheet is adhered to the surface of the negative-electrode collector to obtain the negative-electrode sheet.

In a technical solution II, the negative-electrode binder and a solvent, in a certain ration, are added to a stirring cylinder and are stirred sufficiently to obtain a negative-electrode paste solution. The negative-electrode conductive agent is added to the negative-electrode paste solution. The negative-electrode conductive agent and the negative-electrode paste solution are stirred sufficiently to obtain a conductive paste solution. The negative-electrode active material is added to the conductive paste solution, and the negative-electrode active material and the conductive paste solution are stirred sufficiently to obtain a wet paste. The wet paste is coated onto a surface of the negative-electrode collector. The negative-electrode collector coated with the wet paste is baked to obtain the negative-electrode sheet.

In some embodiments, the separator includes a polymer separator, a non-woven separator or a glass fibre separator.

In some embodiments, the case is made of stainless steel.

In some embodiments, the upper cover body is made of stainless steel.

In the present disclosure, the case made of stainless steel and the upper cover body made of stainless steel are arranged to meet requirements of high temperatures and high humidity environments, improving reliability and environmental adaptability of the product.

In some embodiments, the insulating assembly is made of any one of: polypropylene, polyphenylene sulfide or polyetheretherketone.

The insulating assembly of the present embodiments is resistant to high temperatures and satisfy requirements of wave soldering, enabling the supercapacitor to be fully automated assembled.

In some embodiments, the electrolyte includes an organic solvent and a lithium salt.

In some embodiments, the organic solvent includes a carbonate ester solvent and/or an ether solvent.

It should be noted that the carbonate ester solvent and the ether solvent in the present disclosure may be any solvent known in the art that can be used as a component of the electrolyte, and the present disclosure does not specifically limit the solvent.

In some embodiments, the lithium salt includes any one or a combination of at least two of: LiPF₆, LiTFSI, LiFSI, LiBOB or LiBF₄. Typical and non-limited combinations include: a combination of LiPF₆ and LiTFSI; a combination of LiTFSI, LiFSI and LiBOB; a combination of LiTFSI, LiFSI, LiBOB and LiBF₄; a combination of LiTFSI and LiBF₄; a combination of LiPF₆, LiTFSI and LiFSI, and so on.

The value ranges described in the present disclosure includes not only the point values listed in the above, but also any unlisted point values between the above value ranges. The present disclosure, due to space limitations and for simplicity, does not exhaustively list all possible point values included in the described value ranges.

Following technical effects can be achieved.
(1) In the present disclosure, the carbon electrode material is added to the positive-electrode active material to construct the electric double-layer structure of the supercapacitor, such that advantages of supercapacitors and advantages of lithium-ion batteries are integrated, a transmission distance is shortened, the thickness of the capacitor is reduced, the multiplication output capability is ensured, and the specific energy is effectively improved.
(2) For the ultrathin supercapacitor of the present disclosure, each of the positive-electrode sheet, the separator, and the negative-electrode sheet is a single-layer structure, such that the energy density of the ultrathin supercapacitor is improved, self-discharging of the capacitor is reduced. In this way, a long duration time is ensured. In addition, reliability and safety of the supercapacitor is improved, miniaturization and ultrathinness of the supercapacitor can be achieved, and the supercapacitor may be applicable to ultrathin terminal products.
(3) The manufacturing method of the present disclosure is simple and highly productive, allowing the supercapacitors to be produced in mass.

### BRIEF DESCRIPTION OF THE DRAWINGS

FIG. 1 is a structural schematic view of an ultrathin supercapacitor according to an Embodiment 1 of the present disclosure.
FIG. 2 is a structural schematic view of an ultrathin supercapacitor according to an Embodiment 10 of the present disclosure.

Reference numerals in the drawings: 1 - first active substance layer; 2 - second active substance layer; 3 - separator; 4 - insulating rubber ring; 5 - upper cover body; 6 - case; 7 - positive-electrode collector; 8 - negative-electrode collector.

### DETAILED DESCRIPTION

It is to be understood that the terms "center", "upper", "lower", "top", "bottom", "inside", "outside" in the present specification indicate a directional or positional relationship based on the direction or the position shown in the accompanying drawings. The terms are used only for the purpose of facilitating and simplifying description of the present disclosure and are not intended to indicate or imply that the device or the element must have a particular direction or must be configured and operated in a particular direction. Therefore, the terms shall not be interpreted as a limitation of the present disclosure. Furthermore, the terms "first", "second", and the like are used for descriptive purposes only, and shall not be interpreted as indicating or implying relative importance or implicitly specifying the number of technical features. Therefore, a feature defined by the terms "first", "second", and so on may expressly or implicitly include one or more such features.

Technical solutions of the present disclosure are further described below by referring to the accompanying drawings and specific embodiments.

In an embodiment, a positive-electrode sheet for a capacitor is provided and includes a first active substance layer. The first active substance layer includes a positive-electrode active material, a carbon electrode material, a positive-electrode conductive agent, and a positive-electrode binder. In the present disclosure, the carbon electrode material is added to the positive-electrode active material in order to construct an electric double-layer structure for a supercapacitor. Advantages of the supercapacitor and a lithium-ion battery are combined with each other, a better multiplication output capability is ensured, and the specific energy is effectively improved.

In some embodiments, the carbon electrode material is a porous carbon electrode material. Specifically, the porous carbon electrode material includes porous activated carbon and/or biomass carbon. The porous carbon electrode material has a specific surface area of 1400 to 2000 m²/g, and has a median particle size of 3 µm to 10 µm. In the present disclosure, the porous carbon electrode material, having a high specific surface area, is added to the positive-electrode sheet of the capacitor to form the electric double-layer structure, such that an energy density of the capacitor is improved.

In some embodiments, a total mass of the first active substance layer is recorded as 100%, a mass fraction of the positive-electrode active material is 50% to 94%, a mass fraction of the positive-electrode conductive agent is 1% to 10%, a mass fraction of the positive-electrode binder is 2% to 10%, and a mass fraction of the carbon electrode material is 3% to 50%.

In some embodiments, the positive-electrode active material includes a lithium-containing compound. The lithium-containing compound includes any one or a combination of at least two of: a layered transition metal oxide, a polyanionic compound, and a spinel compound. Specifically, the layered transition metal oxide includes LiMO₂. The M includes any one or a combination of at least two of: Co, Ni and Mn. The polyanionic compound includes LiFePO₄ and/or (LiMnₓFe₁₋ₓPO₄), where the x is 0.1 to 0.6. The spinel compound includes lithium manganate.

In some embodiments, the positive-electrode conductive agent includes any one or a combination of at least two of: conductive carbon black, carbon nanotubes, graphene, and carbon fibre conductive agents. Specifically, the positive-electrode conductive agent has a specific surface area of 40 m²/g to 100 m²/g, and has a median particle size of 10nm to 100 nm.

In some embodiments, the positive-electrode binder includes any one or a combination of at least two of: polyvinylidene fluoride, polytetrafluoroethylene, and polyacrylic acid, ensuring a bonding force inside the positive-electrode material, facilitating structural strength to be improved, and ensuring a molding effect.

In some embodiments, the positive-electrode sheet for the capacitor further includes a positive-electrode collector. The first active substance layer is arranged on at least one side surface of the positive-electrode collector, such that conductivity of the positive-electrode sheet is improved.

Specifically, the positive-electrode collector has a thickness of 6µm to 20 µm. The positive-electrode collector includes an aluminium foil or an aluminium mesh.

In another embodiment, a method of manufacturing the positive-electrode sheet for the capacitor. The method includes: mixing the positive-electrode active material, the carbon electrode material, the positive-electrode conductive agent and the positive-electrode binder to obtain the positive-electrode material; and processing and molding the positive-electrode material to obtain the first active substance layer.

In some embodiments, the mixing operation includes dry mixing or wet mixing. Specifically, when the thickness of the positive-electrode sheet for the capacitor is greater than 200 µm, the dry mixing is performed. When the thickness of the positive-electrode sheet for the capacitor is less than or equal to 200 µm, the wet mixing is performed. That is, in the present disclosure, performing the wet mixing or the dry mixing is determined based on the thickness of the positive-electrode sheet.

In some embodiments, the processing and molding is performed by any one or a combination of at least two of: deposition, hot pressing, coating or roll pressing.

In some embodiments, the method further includes: providing the positive-electrode collector and compounding the positive-electrode material with the positive-electrode collector to form the first active substance layer on at least one side surface of the positive-electrode collector.

In some embodiments, the compounding includes: heating and compressing the positive-electrode material to a surface of the positive-electrode collector, or processing the positive-electrode material into a positive-electrode paste and then coating the positive-electrode paste on the surface of the positive-electrode collector to form the first active substance layer.

In the present disclosure, when the positive-electrode material is made by performing the dry mixing, the heating and compressing operation is performed achieve the compounding operation. When the positive-electrode material is made by performing the wet mixing, the coating operation is performed to achieve the compounding operation. Any ordinary skilled person in the art may determine the operations according to the actual situation.

Exemplarily, for the method of manufacturing the positive-electrode sheet for the capacitor, following two technical solutions are provided.

In a technical solution I, the method of manufacturing the positive-electrode sheet for the capacitor includes following operations.
(1) Mechanical mixing: the positive-electrode active material, the carbon electrode material, the positive-electrode conductive agent, and the positive-electrode binder are added to a mixing device based on a ratio and are stirred sufficiently to obtain positive-electrode material dry powders. The stirring has a revolution in a range of 5rpm to 25 rpm and has a rotation in a range of 500rpm to 2500 rpm.
(2) Hot pressing to form a sheet: the positive-electrode material dry powers obtained from the step (1) is heated and compressed to form a positive-electrode material dry sheet, having a desired thickness. The powers are heated and compressed at a temperature in a range of 100°C to 200 °C.
(3) Compounding: the positive-electrode material dry sheet obtained from the step (2) is adhered to the surface of the positive-electrode collector to obtain the positive-electrode sheet.
(4) Punching: the positive-electrode sheet from the step (3) is punched, by a punching device, to have a desired diameter.

In a technical solution II, the method of manufacturing the positive-electrode sheet for the capacitor includes following operations.

S1, Dissolving the positive-electrode binder. The positive-electrode binder and a solvent, in a certain ration, are added to a stirring cylinder and are stirred sufficiently to obtain a positive-electrode paste solution. The solvent includes: N-methylpyrrolidone or deionized water. A mass ratio of the positive-electrode dry material to the solvent is in a range of 0.4 to 0.8. The stirring has a revolution in a range of 5rpm to 25rpm and a rotation in a range of 500rpm to 2500rpm.

S2, Mixing with the positive-electrode conductive agent. The positive-electrode conductive agent is added to the positive-electrode paste solution obtained from the step S1. The positive-electrode conductive agent and the positive-electrode paste solution are stirred sufficiently to obtain a conductive paste solution. The stirring has a revolution in a range of 5rpm to 25rpm and a rotation in a range of 500rpm to 2500rpm.

S3, Mixing the positive-electrode active material and the carbon electrode material. The positive-electrode active material and the carbon electrode material are added to the conductive paste solution obtained from the step S2 and are stirred sufficiently to obtain a wet paste. The stirring has a revolution in a range of 5rpm to 25rpm and a rotation in a range of 500rpm to 2500rpm.

S4, Coating. The wet paste obtained from the step S3 is coated onto a surface of the positive-electrode collector by a coating device. The positive-electrode collector coated with the wet paste is baked to obtain the positive-electrode sheet.

S5, Cold pressing. The positive-electrode sheet obtained from the step S4 is pressed to have a desired thickness by a cold pressing device.

S6, Punching. The positive-electrode sheet obtained from the step S5 is punched, by a punching device, to have a desired diameter.

In another embodiment, an ultrathin supercapacitor is provided and includes: a case and an upper cover body that is insulated from and connected to the case. The case and the upper cover body cooperatively define a receiving chamber. The positive-electrode sheet, the separator, and a negative-electrode sheet are sequentially laminated inside the receiving chamber. The positive-electrode sheet is connected to the case, and the negative-electrode sheet is at least partially connected to the upper cover body. The positive-electrode sheet is the positive-electrode sheet for the capacitor as described in the above embodiments or is made by performing the method of manufacturing the positive-electrode sheet for the capacitor as described in the above embodiments. Each of the positive-electrode sheet, the separator, and the negative-electrode sheet is a single-layer structure. Compared to a multi-layer laminated sheet or the winding structure in the art, the single-layer structure effectively improves the energy density of the ultrathin supercapacitor, reduces self-discharging of the capacitor in order to ensure a long duration time. In addition, reliability and safety of the supercapacitor is improved, the supercapacitor can be disassembled easily, manufacturing the supercapacitor in batch can be achieved easily, miniaturization and ultrathinness of the supercapacitor can be achieved, and the supercapacitor may be applicable to ultrathin terminal products.

A size specification of the ultrathin supercapacitor of the present disclosure includes, but not limited to, 1016 (a diameter of 10mm, a thickness of 1.6mm), 1216 (a diameter of 12mm, a thickness of 1.6mm), 2016 (a diameter of 20mm, a thickness of 1.6mm), 2032 (a diameter of 20mm, a thickness of 3.2mm) and 2450 (a diameter of 24mm, a thickness of 5mm).

In some embodiments, the positive-electrode sheet further includes: the positive-electrode collector. The positive-electrode collector is disposed between the case and the first active substance layer.

In some embodiments, an electrolyte is filled to an interior of the case. The electrolyte includes an organic solvent and a lithium salt. Specifically, the organic solvent includes a carbonate ester solvent and/or an ether solvent. The lithium salt includes any one or a combination of at least two of: LiPF₆, LiTFSI, LiFSI, LiBOB or LiBF₄.

In some embodiments, the case is connected to the upper cover body via an insulating assembly. The insulating assembly is an insulating rubber ring. Specifically, the insulating assembly is made of any one of: polypropylene, polyphenylene sulfide or polyetheretherketone. The insulating assembly is resistant to high temperatures and satisfy requirements of wave soldering, enabling the supercapacitor to be fully automated assembled.

In some embodiments, the separator includes a polymer separator, a non-woven separator or a glass fibre separator. In some embodiments, the separator is the polymer separator. Specifically, the polymer separator includes a single-layer polypropylene (PP) separator, a single-layer polyethylene (PE) separator, a PP/PE/PP triple-layer separator, a PP-coated separator, or a PE-coated separator, which are known to any ordinary skilled person in the art.

In some embodiments, the case is made of stainless steel. A material of the upper cover body is stainless steel. In the present disclosure, the case made of stainless steel and the upper cover body made of stainless steel are arranged to meet requirements of high temperatures and high humidity environments, improving reliability and environmental adaptability of the product.

In some embodiments, the negative-electrode sheet includes a second active substance layer, the second active substance layer includes a negative-electrode active material, a negative-electrode conductive agent, and a negative-electrode binder.

In some embodiments, the negative-electrode sheet further includes a negative-electrode collector, the negative-electrode collector is disposed between the upper cover body and the second active substance layer.

Specifically, the negative-electrode collector includes any one of: a copper foil, a nickel mesh, an aluminium foil or an aluminium mesh. A thickness of the negative-electrode collector is in a range of 6µm to 20 µm.

Specifically, a total mass of the second active substance layer is recorded as 100%, a mass fraction of the negative-electrode conductive agent is in a range of 2% to 10%, and a mass fraction of the negative-electrode binder is in a range of 2% to 10%.

In some embodiments, the negative-electrode active material includes lithium titanate and/or a carbon active material, preferably lithium titanate. In this way, multiplication performance and a cycle service life of the ultrathin supercapacitor can be significantly improved. In addition, due to a high voltage plateau, a risk of over-discharging and lithium precipitation does not exist, such that safety of the product is greatly improved. The carbon active material includes any one or a combination of at least two of: graphite, soft carbon, hard carbon, or intermediate-phase carbon microspheres. The negative-electrode conductive agent includes any one or a combination of at least two of: conductive carbon black, carbon nanotubes, graphene or carbon fibre conductive agents. The negative-electrode binder includes any one or a combination of at least two of: polyvinylidene fluoride, polytetrafluoroethylene, polyacrylic acid, sodium carboxymethylcellulose, and styrene-butadiene rubber. In this way, bonding strength within the negative-electrode material is ensured, structural strength is improved, and a molding effect is improved.

Exemplarily, a method of manufacturing the negative-electrode sheet is provided and includes: providing the negative-electrode collector; mixing the negative-electrode active material, the negative-electrode conductive agent, and the negative-electrode binder to obtain the negative-electrode material; and compounding the negative-electrode material with the negative-electrode collector so as to form the second active substance layer on a surface of the negative-electrode collector.

Specifically, the mixing operation includes dry mixing or wet mixing. When a thickness of the negative-electrode sheet is greater than 200 µm, the dry mixing is performed. When the thickness of the negative-electrode sheet is less than or equal to 200 µm, the wet mixing is performed. That is, in the present disclosure, performing the wet mixing or the dry mixing is determined based on the thickness of the negative-electrode sheet.

The compounding operation includes: heating and compressing the negative-electrode material to the surface of the negative-electrode collector, or making the negative-electrode material into a negative-electrode paste and coating the negative-electrode paste on the surface of the negative-electrode collector to form the second active substance layer.

Specifically, in the present disclosure, when the negative-electrode material is made by performing the dry mixing, the heating and compressing operation is performed achieve the compounding operation. When the negative-electrode material is made by performing the wet mixing, the coating operation is performed to achieve the compounding operation. Any ordinary skilled person in the art may determine the operations according to the actual situation.

Exemplarily, for the method of manufacturing the negative-electrode sheet, following two technical solutions are provided.

In a technical solution I, the method of manufacturing the negative-electrode sheet includes following operations.

G1, Mechanical mixing: the negative-electrode active material, the negative-electrode conductive agent, and the negative-electrode binder, in a certain ratio, are added to a mixing device and are stirred sufficiently to obtain negative-electrode material dry powders. The stirring has a revolution in a range of 5rpm to 25 rpm and has a rotation in a range of 500rpm to 2500 rpm.

G2, Hot pressing to form a sheet: the negative-electrode material dry powers obtained from the step G1 is heated and compressed to form a negative-electrode material dry sheet, having a desired thickness. The powers are heated and compressed at a temperature in a range of 100°C to 200 °C.

G3, Adhering to the negative-electrode collector: the negative-electrode material dry sheet obtained from the step G2 is adhered to the surface of the negative-electrode collector to obtain the negative-electrode sheet.

G4, Punching: the negative-electrode sheet from the step G3 is punched, by a punching device, to have a desired diameter.

In a technical solution II, the method of manufacturing the negative-electrode sheet includes following operations.

S11, Dissolving the negative-electrode binder. The negative-electrode binder and a solvent, in a certain ration, are added to a stirring cylinder and are stirred sufficiently to obtain a negative-electrode paste solution. The solvent includes: N-methylpyrrolidone or deionized water. A mass ratio of the negative-electrode dry material to the solvent is in a range of 0.4 to 0.8. The stirring has a revolution in a range of 5rpm to 25rpm and a rotation in a range of 500rpm to 2500rpm.

S12, Mixing with the negative-electrode conductive agent. The negative-electrode conductive agent is added to the negative-electrode paste solution obtained from the step S11. The negative-electrode conductive agent and the negative-electrode paste solution are stirred sufficiently to obtain a conductive paste solution. The stirring has a revolution in a range of 5rpm to 25rpm and a rotation in a range of 500rpm to 2500rpm.

S13, Mixing with the negative-electrode active material. The negative-electrode active material is added to the conductive paste solution obtained from the step S12, and the negative-electrode active material and the conductive paste solution are stirred sufficiently to obtain a wet paste. The stirring has a revolution in a range of 5rpm to 25rpm and a rotation in a range of 500rpm to 2500rpm.

S14, Coating. The wet paste obtained from the step S13 is coated onto a surface of the negative-electrode collector by a coating device. The negative-electrode collector coated with the wet paste is baked to obtain the negative-electrode sheet.

S15, Cold pressing. The negative-electrode sheet obtained from the step S14 is pressed to have a desired thickness by a cold pressing device.

S16, Punching. The negative-electrode sheet obtained from the step S15 is punched, by a punching device, to have a desired diameter.

The present disclosure will be described in further detail below. However, the following embodiments are only simple examples of the present disclosure and do not represent or limit the scope of the present disclosure. The scope of the present disclosure is subject to the appended claims.

### Embodiment 1

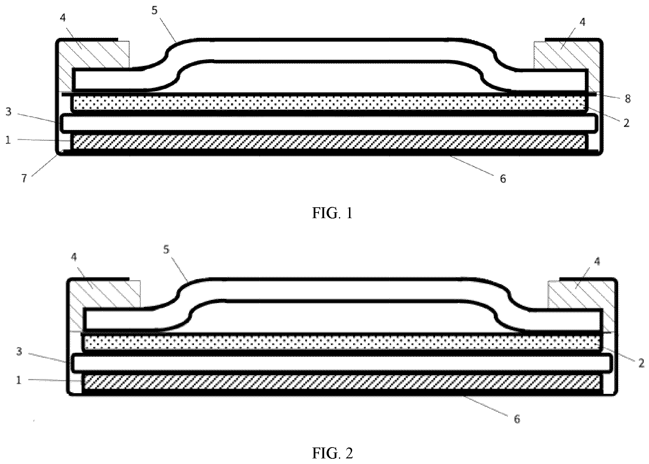

The present embodiment provides an ultrathin supercapacitor, in a model of 2016, having a diameter of 20 mm and a thickness of 1.6 mm. As shown in FIG. 1, the supercapacitor includes a case 6 made of stainless steel and an upper cover 5. The case 6 is insulated from and connected to the upper cover 5 via an insulating rubber ring 4. The case 6 and the upper cover 5 cooperatively define a receiving cavity. A positive-electrode sheet, a separator 3, and a negative-electrode sheet are sequentially laminated in the receiving cavity from a bottom of the case 6 to the upper cover 5. The positive-electrode sheet is connected to the case 6, and the negative-electrode sheet is connected to the upper cover 5.

The positive-electrode sheet includes a positive-electrode collector 7 having a diameter of 15.8 mm and a first active substance layer 1 arranged on the positive-electrode collector 7. The positive-electrode collector 7 is connected to the case 6. The positive-electrode collector 7 is made of an aluminium foil having a thickness of 180 µm. The first active substance layer 1 includes lithium cobaltate, activated carbon having a specific surface area of 1600 m²/g, SP, CNT, and polytetrafluoroethylene. The negative-electrode sheet includes a negative-electrode collector 8 having a diameter of 15.8 mm and a second active substance layer 2 arranged on the negative-electrode collector 8. The negative-electrode collector 8 is connected to the upper cover 5. The negative-electrode collector 8 is made of an aluminium foil having a thickness of 180 µm. The second active substance layer 2 includes lithium titanate, SP, CNT, and polytetrafluoroethylene. The separator 3 is a glass fibre separator 3. The case 6 is filled with an electrolyte, and the electrolyte includes LiPF₆, EC, DMC and EMC.

The present embodiment further provides a method of manufacturing the ultrathin supercapacitor as described in the above. The method includes the following operations.

In an operation 1, the positive-electrode sheet is manufactured by performing the following sub-operations.
(1) The lithium cobaltate, the activated carbon having the specific surface area of 1600 m²/g, the SP, the CNT, and the polytetrafluoroethylene, in a mass ratio of 71:20:4:1:4, are sufficiently mixed with each other to obtain positive-electrode material dry powders. The mixing is achiceved by stirring, and the stirring has a revolution speed of 15 rpm and a self-rotation speed of 2000 rpm.
(2) The positive-electrode material dry powders obtained from the sub-operation (1) are heated and compressed to form a positive-electrode material dry sheet having a thickness of 10 µm. The positive-electrode material dry powders are heated and compressed at 250 °C.
(3) The positive-electrode material dry sheet obtained from the sub-operation (2) is adhered to a surface of the positive-electrode collector 7 to obtain the positive-electrode sheet.
(4) The positive-electrode sheet obtained from the sub-operation (3) is punched, by a punching device, to have a desired diameter.

In an operation 2, the negative-electrode sheet is manufactured by performing following sub-operations.

S1, the lithium titanate, the SP, the CNT and the polytetrafluoroethylene, in a mass ratio of 91:4:1:4, are sufficiently mixed with each other to obtain negative-electrode material dry powders.

S2, the negative-electrode material dry powders obtained from the sub-operation S1 are heated and compressed to form a negative-electrode material dry sheet having a thickness of 10 µm.

S3, the negative-electrode material dry sheet obtained from the sub-operation S2 is adhered to a surface of a negative-electrode collector 8 to obtain the negative-electrode sheet.

S4, the negative-electrode sheet obtained from the sub-operation S3 is punched, by a punching device, to have a desired diameter.

In an operation 3, the positive-electrode sheet, the separator 3, and the negative-electrode sheet are assembled with each other by laminating and are arranged into the case 6. The electrolyte is injected into the case 6. The case 6 is then encapsulated. In this way, the ultrathin supercapacitor is obtained.

### Embodiment 2

The present embodiment provides an ultrathin supercapacitor, and a difference between the ultrathin supercapacitor in the present embodiment and the ultrathin supercapacitor in the Embodiment 1 is that, during manufacturing the positive-electrode sheet, the positive-electrode active material is lithium nickel cobalt manganate. The configuration, the manufacturing method, the materials and the mass ratios applied in the present embodiment are the same as those of Embodiment 1.

### Embodiment 3

The present embodiment provides an ultrathin supercapacitor, and a difference between the ultrathin supercapacitor in the present embodiment and the ultrathin supercapacitor in the Embodiment 1 is that the first active substance layer 1 in the present embodiment includes lithium manganate, activated carbon having specific surface area of 1800 m²/g, carbon nanotubes, graphene, and polyvinylidene fluoride; and the second active substance layer 2 in the present embodiment includes lithium titanate, SP, CNT, and polyvinylidene fluoride. The configuration and sizes applied in the present embodiment are the same as those of Embodiment 1.

The method of manufacturing the ultrathin supercapacitor of the present embodiment specifically includes following operations.

In an operation 1, the positive-electrode sheet is manufactured by performing the following sub-operations.
(1) The lithium manganate, the activated carbon having the specific surface area of 1800 m²/g, the carbon nanotubes, the graphene and the polyvinylidene fluoride, in a mass ratio of 65:22:4:4:5, are sufficiently mixed with each other to obtain positive-electrode material dry powders. The mixing is achieved by stirring, and the stirring has a revolution speed of 20 rpm and a self-rotation speed of 800 rpm.
(2) The positive-electrode material dry powders obtained from the sub-operation (1) are heated and compressed to form a positive-electrode material dry sheet having a thickness of 15 µm. The positive-electrode material dry powders are heated and compressed at 100 °C.
(3) The positive-electrode material dry sheet obtained from the sub-operation (2) is adhered to the surface of the positive-electrode collector to obtain the positive-electrode sheet.
(4) The positive-electrode sheet obtained from the sub-operation (3) is punched, by a punching device, to have a desired diameter.

In an operation 2, the negative-electrode sheet is manufactured by performing following sub-operations.

S1, the lithium titanate, the SP, the CNT and the polyvinylidene fluoride, in a mass ratio of 85:5:4:6, are sufficiently mixed with each other to obtain negative-electrode material dry powders. The mixing is achieved by stirring, and the stirring has a revolution speed of 20 rpm and a self-rotation speed of 800 rpm.

S2, the negative-electrode material dry powders obtained from the sub-operation S1 are heated and compressed to form a negative-electrode material dry sheet having a thickness of 15 µm. The negative-electrode material dry powders are heated and compressed at 100°C.

S3, the negative-electrode material dry sheet obtained from the sub-operation S2 is adhered to the surface of the negative-electrode collector to obtain the negative-electrode sheet.

S4, the negative-electrode sheet obtained from the sub-operation S3 is punched, by a punching device, to have a desired diameter.

In an operation 3, the positive-electrode sheet, the separator, and the negative-electrode sheet are assembled with each other by laminating and are arranged into the case 6. The electrolyte is injected into the case 6. The case 6 is then encapsulated. In this way, the ultrathin supercapacitor is obtained.

### Embodiment 4

The present embodiment provides an ultrathin supercapacitor, and a difference between the ultrathin supercapacitor in the present embodiment and the ultrathin supercapacitor in the Embodiment 1 is that the first active substance layer 1 in the present embodiment includes LiFePO₄, biomass carbon having a specific surface area of 1400 m²/g, carbon nanotubes, a carbon fibre conductive agent, and polytetrafluoroethylene; and the second active substance layer 2 in the present embodiment includes lithium titanate, SP, a carbon fibre conductive agent, and polyvinylidene fluoride. The configuration and sizes applied in the present embodiment are the same as those of Embodiment 1. The method of manufacturing the ultrathin supercapacitor of the present embodiment specifically includes following operations.

In an operation 1, the positive-electrode sheet is manufactured by performing the following sub-operations.
(1) The LiFePO₄, the biomass carbon having the specific surface area of 1400 m²/g, the carbon nanotubes, the carbon fibre conductive agent, and the polytetrafluoroethylene, in a mass ratio of 55:30:5:4:6, are sufficiently mixed with each other to obtain positive-electrode material dry powders. The mixing is achieved by stirring, and the stirring has a revolution speed of 5 rpm and a self-rotation speed of 1500 rpm.
(2) The positive-electrode material dry powders obtained from the sub-operation (1) are heated and compressed to form a positive-electrode material dry sheet having a thickness of 6 µm. The positive-electrode material dry powders are heated and compressed at 120 °C.
(3) The positive-electrode material dry sheet obtained from the sub-operation (2) is adhered to the surface of the positive-electrode collector to obtain the positive-electrode sheet.
(4) The positive-electrode sheet obtained from the sub-operation (3) is punched, by a punching device, to have a desired diameter.

In an operation 2, the negative-electrode sheet is manufactured by performing following sub-operations.

S1, the lithium titanate, the SP, the carbon fibre conductive agent, and the polyvinylidene fluoride, in a mass ratio of 90:3:5:2, are sufficiently mixed with each other to obtain negative-electrode material dry powders. The mixing is achieved by stirring, and the stirring has a revolution speed of 5 rpm and a self-rotation speed of 1500 rpm.

S2, the negative-electrode material dry powders obtained from the sub-operation S1 are heated and compressed to form a negative-electrode material dry sheet having a thickness of 6 µm. The negative-electrode material dry powders are heated and compressed at 120°C.

S3, the negative-electrode material dry sheet obtained from the sub-operation S2 is adhered to the surface of the negative-electrode collector to obtain the negative-electrode sheet.

S4, the negative-electrode sheet obtained from the sub-operation S3 is punched, by a punching device, to have a desired diameter.

In an operation 3, the positive-electrode sheet, the separator, and the negative-electrode sheet are assembled with each other by laminating and are arranged into the case 6. The electrolyte is injected into the case 6. The case 6 is then encapsulated. In this way, the ultrathin supercapacitor is obtained.

### Embodiment 5

The present embodiment provides an ultrathin supercapacitor, and a difference between the ultrathin supercapacitor in the present embodiment and the ultrathin supercapacitor in the Embodiment 1 is that the first active substance layer 1 in the present embodiment includes LiMn_{0.3}Fe_{0.5}PO₄, biomass carbon having a specific surface area of 2000 m²/g, conductive carbon black, a carbon fibre conductive agent, and polyacrylic acid; and the second active substance layer 2 in the present embodiment includes lithium titanate, graphene, a carbon fibre conductive agent, and polyacrylic acid. The configuration and sizes applied in the present embodiment are the same as those of Embodiment 1. The method of manufacturing the ultrathin supercapacitor of the present embodiment specifically includes following operations.

In an operation 1, the positive-electrode sheet is manufactured by performing the following sub-operations.
(1) The LiMn_{0.5}Fe_{0.5}PO₄, the biomass carbon having a specific surface area of 2000 m²/g, the conductive carbon black, the carbon fibre conductive agent, and the polyacrylic acid, in a mass ratio of 90:5:2:2:2, are sufficiently mixed with each other to obtain positive-electrode material dry powders. The mixing is achieved by stirring, and the stirring has a revolution speed of 25 rpm and a self-rotation speed of 2500 rpm.
(2) The positive-electrode material dry powders obtained from the sub-operation (1) are heated and compressed to form a positive-electrode material dry sheet having a thickness of 20 µm. The positive-electrode material dry powders are heated and compressed at 200 °C.
(3) The positive-electrode material dry sheet obtained from the sub-operation (2) is adhered to the surface of the positive-electrode collector to obtain the positive-electrode sheet.
(4) The positive-electrode sheet obtained from the sub-operation (3) is punched, by a punching device, to have a desired diameter.

In an operation 2, the negative-electrode sheet is manufactured by performing following sub-operations.

S1, the lithium titanate, the graphene, the carbon fibre conductive agent, and the polyacrylic acid, in a mass ratio of 88:4:4:4, are sufficiently mixed with each other to obtain negative-electrode material dry powders. The mixing is achieved by stirring, and the stirring has a revolution speed of 25 rpm and a self-rotation speed of 2500 rpm.

S2, the negative-electrode material dry powders obtained from the sub-operation S1 are heated and compressed to form a negative-electrode material dry sheet having a thickness of 20 µm. The negative-electrode material dry powders are heated and compressed at 200°C.

S3, the negative-electrode material dry sheet obtained from the sub-operation S2 is adhered to the surface of the negative-electrode collector to obtain the negative-electrode sheet.

S4, the negative-electrode sheet obtained from the sub-operation S3 is punched, by a punching device, to have a desired diameter.

In an operation 3, the positive-electrode sheet, the separator, and the negative-electrode sheet are assembled with each other by laminating and are arranged into the case 6. The electrolyte is injected into the case 6. The case 6 is then encapsulated. In this way, the ultrathin supercapacitor is obtained.

### Embodiment 6

The present embodiment provides an ultrathin supercapacitor, and a difference between the ultrathin supercapacitor in the present embodiment and the ultrathin supercapacitor in the Embodiment 1 is that the first active substance layer 1 in the present embodiment includes LiMn_{0.3}Fe_{0.7}PO₄, activated carbon having a specific surface area of 1500 m²/g, conductive carbon black, graphene and polytetrafluoroethylene; and the second active substance layer 2 in the present embodiment includes intermediate-phase carbon microspheres, graphene, carbon nanotubes and polytetrafluoroethylene. The configuration and sizes applied in the present embodiment are the same as those of Embodiment 1. The method of manufacturing the ultrathin supercapacitor of the present embodiment specifically includes following operations.

In an operation 1, the positive-electrode sheet is manufactured by performing the following sub-operations.
(1) The LiMn_{0.3}Fe_{0.7}PO₄, the activated carbon having the specific surface area of 1500 m²/g, the conductive carbon black, the graphene and the polytetrafluoroethylene, in a mass ratio of 75:15:5:3:2, are sufficiently mixed with each other to obtain positive-electrode material dry powders. The mixing is achieved by stirring, and the stirring has a revolution speed of 22 rpm and a self-rotation speed of 2000 rpm.
(2) The positive-electrode material dry powders obtained from the sub-operation (1) are heated and compressed to form a positive-electrode material dry sheet having a thickness of 12 µm. The positive-electrode material dry powders are heated and compressed at 180 °C.
(3) The positive-electrode material dry sheet obtained from the sub-operation (2) is adhered to the surface of the positive-electrode collector to obtain the positive-electrode sheet.
(4) The positive-electrode sheet obtained from the sub-operation (3) is punched, by a punching device, to have a desired diameter.

In an operation 2, the negative-electrode sheet is manufactured by performing following sub-operations.

S1, the intermediate-phase carbon microspheres, the graphene, the carbon nanotubes and the polytetrafluoroethylene, in a mass ratio of 92:2:3:3, are sufficiently mixed with each other to obtain negative-electrode material dry powders. The mixing is achieved by stirring, and the stirring has a revolution speed of 22 rpm and a self-rotation speed of 2000 rpm.

S2, the negative-electrode material dry powders obtained from the sub-operation S1 are heated and compressed to form a negative-electrode material dry sheet having a thickness of 12 µm. The negative-electrode material dry powders are heated and compressed at 180°C.

S3, the negative-electrode material dry sheet obtained from the sub-operation S2 is adhered to the surface of the negative-electrode collector to obtain the negative-electrode sheet.

S4, the negative-electrode sheet obtained from the sub-operation S3 is punched, by a punching device, to have a desired diameter.

In an operation 3, the positive-electrode sheet, the separator, and the negative-electrode sheet are assembled with each other by laminating and are arranged into the case 6. The electrolyte is injected into the case 6. The case 6 is then encapsulated. In this way, the ultrathin supercapacitor is obtained.

### Embodiment 7

The present embodiment provides an ultrathin supercapacitor, and a difference between the ultrathin supercapacitor in the present embodiment and the ultrathin supercapacitor in the Embodiment 1 is that, in the present embodiment, each of the thicknesses of the positive-electrode collector and the thicknesses of the negative-electrode collector is 220 µm, and the positive-electrode collector and the negative-electrode collector are manufactured by wet mixing. The materials and ratios of the materials for manufacture in the present embodiment are the same as those of Embodiment 1. The method of manufacturing the ultrathin supercapacitor of the present embodiment specifically includes following operations.

In an operation 1, the positive-electrode sheet is manufactured by performing the following sub-operations.
(1) Polytetrafluoroethylene and N-methylpyrrolidone, in a mass fraction of 0.5, are sufficiently mixed with each other to obtain a positive-electrode paste solution. The mixing is achieved by stirring, and the stirring has a revolution speed of 15 rpm and a self-rotation speed of 2000 rpm.
(2) SP and CNT are added to and mixed with the positive-electrode paste solution to obtain a positive-electrode conductive paste solution. The mixing is achieved by stirring, and the stirring has a revolution speed of 15 rpm and a self-rotation speed of 2000 rpm.
(3) Lithium cobaltate and activated carbon having a specific surface area of 1600 m²/g are added to and mixed with the positive-electrode conductive paste solution to obtain a wet paste. The mixing is achieved by stirring, and the stirring has a revolution speed of 15 rpm and a self-rotation speed of 2000 rpm.
(4) The wet paste is coated on the surface of the positive-electrode collector to obtain the positive-electrode sheet.
(5) The positive-electrode sheet obtained from the sub-operation (3) is punched, by a punching device, to have a desired diameter.

In an operation 2, the negative-electrode sheet is manufactured by performing following sub-operations.

S1, polytetrafluoroethylene with N-methylpyrrolidone, in a mass ratio of 0.4, are sufficiently mixed with each other to obtain a negative-electrode paste solution.

S2, SP and CNT are added to and mixed with the negative-electrode paste solution to obtain a negative-electrode conductive paste solution. The mixing is achieved by stirring, and the stirring has a revolution speed of 15 rpm and a self-rotation speed of 2000 rpm.

S3, lithium titanate is added to and mixed with the negative-electrode conductive paste solution to obtain a wet paste. The mixing is achieved by stirring, and the stirring has a revolution speed of 15 rpm and a self-rotation speed of 2000 rpm.

S4, the wet paste is coated on the surface of the negative-electrode collector to obtain the negative-electrode sheet.

S5, The negative-electrode sheet obtained from the sub-operation S4 is punched, by a punching device, to have a desired diameter.

In an operation 3, the positive-electrode sheet, the separator, and the negative-electrode sheet are assembled with each other by laminating and are arranged into the case 6. The electrolyte is injected into the case 6. The case 6 is then encapsulated. In this way, the ultrathin supercapacitor is obtained.

### Embodiment 8

The present embodiment provides an ultrathin supercapacitor, and a difference between the ultrathin supercapacitor in the present embodiment and the ultrathin supercapacitor in the Embodiment 1 is that, during manufacturing the positive-electrode sheet, the specific surface area of the activated carbon is 1200 m²/g. The configuration, the manufacturing method, the materials and the mass ratios applied in the present embodiment are the same as those of Embodiment 1.

### Embodiment 9

The present embodiment provides an ultrathin supercapacitor, and a difference between the ultrathin supercapacitor in the present embodiment and the ultrathin supercapacitor in the Embodiment 1 is that, during manufacturing the positive-electrode sheet, the specific surface area of the activated carbon is 2200 m²/g. The configuration, the manufacturing method, the materials and the mass ratios applied in the present embodiment are the same as those of Embodiment 1.

### Embodiment 10

The present embodiment provides an ultrathin supercapacitor, in a model of 2032, having a diameter of 20 mm and a thickness of 3.2 mm. As shown in FIG. 2, the supercapacitor includes a case 6 made of stainless steel and an upper cover 5. The case 6 is insulated from and connected to the upper cover 5 via an insulating rubber ring 4. The case 6 and the upper cover 5 cooperatively define a receiving cavity. A positive-electrode sheet, a separator 3, and a negative-electrode sheet are sequentially laminated in the receiving cavity from a bottom of the case 6 to the upper cover 5. The positive-electrode sheet includes a first active substance layer 1, having a diameter of 15.8 mm and a thickness of 10µm. The first active substance layer 1 includes lithium cobaltate, activated carbon, SP, CNT, and polytetrafluoroethylene. The negative-electrode sheet includes a second active substance layer, having a diameter of 15.8 mm and a thickness of 10µm. The second active substance layer 2 includes lithium titanate, SP, CNT, and polytetrafluoroethylene. The separator 3 is a glass fibre separator 3. The case 6 is filled with an electrolyte, and the electrolyte includes LiPF₆, EC, DMC and EMC.

The present embodiment further provides a method of manufacturing the ultrathin supercapacitor as described in the above. The method includes the following operations.

In an operation 1, the positive-electrode sheet is manufactured by performing the following sub-operations.
(1) The lithium cobaltate, the activated carbon having a specific surface area of 1600 m²/g, the SP, the CNT, and the polytetrafluoroethylene, in a mass ratio of 71:20:4:1:4, are sufficiently mixed with each other to obtain positive-electrode material dry powders. The mixing is achieved by stirring, and the stirring has a revolution speed of 15 rpm and a self-rotation speed of 2000 rpm.
(2) The positive-electrode material dry powders obtained from the sub-operation (1) are heated and compressed to form a positive-electrode material dry sheet. The positive-electrode material dry powders are heated and compressed at 250 °C.
(3) The positive-electrode sheet obtained from the sub-operation (2) is punched, by a punching device, to have a desired diameter.

In an operation 2, the negative-electrode sheet is manufactured by performing following sub-operations.

S1, the lithium titanate, the SP, the CNT, and the polytetrafluoroethylene, in a mass ratio of 91:4:1:4, are sufficiently mixed with each other to obtain negative-electrode material dry powders.

S2, the negative-electrode material dry powders obtained from the sub-operation S1 are heated and compressed to form a negative-electrode material dry sheet.

S3, the negative-electrode sheet obtained from the sub-operation S2 is punched, by a punching device, to have a desired diameter.

In an operation 3, the positive-electrode sheet, the separator 3, and the negative-electrode sheet are assembled with each other by laminating and are arranged into the case 6. The electrolyte is injected into the case 6. The case 6 is then encapsulated. In this way, the ultrathin supercapacitor is obtained.

### Control embodiment 1

The present control embodiment provides a supercapacitor. Different from the Embodiment 1, in the present control embodiment, the activated carbon having the specific surface area of 1600 m²/g is not added to the first active substance layer 1 of the positive-electrode sheet. The configuration, the manufacturing method, the materials and the mass ratios applied in the present embodiment are the same as those of Embodiment 1.

### Control embodiment 2

The present control embodiment provides a supercapacitor. Configuration of the supercapacitor of the present control embodiment is different from that in the Embodiment 1. In the present control embodiment, a plurality of positive-electrode sheets and a plurality of negative-electrode sheets are alternately laminated in a down-to-up direction within the case and the upper cover body; the separator is disposed between every positive-electrode sheet and a respective negative-electrode sheet adjacent to the positive-electrode sheet; one of the plurality of positive-electrode sheets is located at a lowest layer to be connected to the case, and one of the plurality of negative-electrode sheets is located at an uppermost layer to be connected to the upper cover body. The rest configuration, the manufacturing method, the materials and the mass ratios applied in the present embodiment are the same as those of Embodiment 1.

Capacity tests, tests of cycling performance, and self-discharging tests are performed on the ultrathin steel-case supercapacitors in the Embodiments 1 to 10, the Control embodiment 1 and the Control embodiment 2. Results of the tests are shown in Table 1.

Conditions of the capacity tests are as follows. The supercapacitors are charged at a constant current and a constant voltage at a multiplication rate of 1C, and a cut-off current is 0.2C. Subsequently, the supercapacitors are discharged at 2C, and a discharging capacity is recorded. The tests of cycling performance are performed as follows. The supercapacitors are discharged at 1C current pulse for 5s and cyclically for 10000 times. The self-discharging tests are performed by testing leakage currents.

**Table 1**

| Serial No. | Capacity test (F) | Cyclic capacity retention rate (%) | leakage currents (µA) |
|---|---|---|---|
| Embodiment 1 | 55 | 97 | 2.5 |
| Embodiment 2 | 62 | 99 | 2.6 |
| Embodiment 3 | 53 | 98 | 3.1 |
| Embodiment 4 | 51 | 99 | 2.3 |
| Embodiment 5 | 56 | 98 | 2.4 |
| Embodiment 6 | 54 | 98 | 2.4 |
| Embodiment 7 | 55 | 97 | 2.7 |
| Embodiment 8 | 55 | 92 | 3.0 |
| Embodiment 9 | 55 | 93 | 3.2 |
| Embodiment 10 | 56 | 94 | 2.8 |
| Control embodiment 1 | 56 | 90 | 2.2 |
| Control embodiment 2 | 35 | 97 | 3.0 |

As can be seen from Table 1, the ultrathin supercapacitors in the Embodiments 1 to 10 of the present disclosure have a high capacity and a high cyclic capacity retention rate, and have a low leakage current. Therefore, the duration time of each ultrathin supercapacitor is ensured, and safety performance of the supercapacitors is improved. Compared to the Embodiment 1, performance of the supercapacitors of the Embodiment 8 and the Embodiment 9 is slightly reduced, and this is substantially due to differences in the specific surface area of the activated carbon added to the active substance of the positive-electrode sheet. The specific surface area of the activated carbon added in the Embodiment 8 is excessively small, such that the electric double-layer structure may not be formed easily, and the multiplication output capability is reduced. The specific surface area of the activated carbon in the Embodiment 9 is excessively large, such that the cyclic performance with the lithium cobaltate is reduced, and the multiplication output capability is reduced, and therefore, overall performance of the supercapacitor is reduced.

According to Table 1, the cyclic capacity retention rate of the supercapacitor in the Embodiment 1 is higher than that of the Control embodiment 1, and this is substantially because the porous activated carbon having the high specific surface area is added to the active material of the positive-electrode sheet in the Embodiment 1, enabling the electric double-layer structure to be formed, and improving the multiplication output capacity of the supercapacitor. The capacity of the capacitor in the Control embodiment 2 is lower than that of the Control embodiment 1, and the leakage current in the Control embodiment 2 is greater than that in the Control embodiment 1. In addition, the multi-layer laminated structure in the Control embodiment 2 causes the thickness of the capacitor to be increased, causing the capacitor to be less applicable in ultrathin terminal products.

The applicant declares that the above shows only specific embodiments of the present disclosure, but the scope of the present disclosure is not limited thereto. Any ordinary skilled person in the art shall understand that any changes or substitutions, which can be easily obtained by any ordinary skilled person in the art within the technical scope of the present disclosure, shall fall within the scope of the present disclosure.

## Claims

1. A positive-electrode sheet for a capacitor, comprising a first active substance layer (1), wherein the first active substance layer (1) comprises a positive-electrode active material, a carbon electrode material, a positive-electrode conductive agent, and a positive-electrode binder.

2. The positive-electrode sheet for the capacitor according to claim 1, wherein the carbon electrode material is a porous carbon electrode material,
preferably, the porous carbon electrode material comprises porous activated carbon and/or biomass carbon;
preferably, the porous carbon electrode material has a specific surface area of 1400 m²/g to 2000 m²/g; and
preferably, the carbon electrode material has a median particle size of 3 µm to 10 µm.

3. The positive-electrode sheet for the capacitor according to claim 1 or 2, wherein a total mass of the first active substance layer (1) is recorded as 100%, a mass fraction of the positive-electrode active material is 50% to 94%;
a mass fraction of the positive-electrode conductive agent is 1% to 10%;
a mass fraction of the positive-electrode binder is 2% to 10%; and
a mass fraction of the carbon electrode material is 3% to 50%;
preferably, the positive-electrode active material comprises a lithium-containing compound; the lithium-containing compound comprises any one or a combination of at least two of: a layered transition metal oxide, a polyanionic compound, and a spinel compound;
preferably, the layered transition metal oxide comprises LiMO₂; the M comprises any one or a combination of at least two of: Co, Ni and Mn;
preferably, the polyanionic compound comprises LiFePO₄ and/or (LiMnₓFe₁₋ₓPO₄), the x is 0.1 to 0.6;
preferably, the spinel compound comprises lithium manganate;
preferably, the positive-electrode conductive agent comprises any one or a combination of at least two of: conductive carbon black, carbon nanotubes, graphene, and a carbon fibre conductive agent;
preferably, the positive-electrode conductive agent has a specific surface area of 40 m²/g to 100 m²/g;
preferably, the positive-electrode conductive agent has a median particle size of 10nm to 100 nm;
preferably, the positive-electrode binder comprises any one or a combination of at least two of: polyvinylidene fluoride, polytetrafluoroethylene, and polyacrylic acid.

4. The positive-electrode sheet for the capacitor according to any one of claims 1 to 3, wherein the positive-electrode sheet for the capacitor further comprises a positive-electrode collector (7); the first active substance layer (1) is arranged on at least one side surface of the positive-electrode collector (7);
preferably, the positive-electrode collector (7) has a thickness of 6µm to 20 µm; and
preferably, the positive-electrode collector (7) comprises an aluminium foil or an aluminium mesh.

5. A method of manufacturing the positive-electrode sheet for the capacitor according to any one of claims 1 to 4, the method comprising:
mixing (S1) the positive-electrode active material, the carbon electrode material, the positive-electrode conductive agent and the positive-electrode binder to obtain a positive-electrode material; and processing and molding the positive-electrode material to obtain the first active substance layer.

6. The method according to claim 5, wherein the mixing comprises dry mixing or wet mixing; preferably, when a thickness of the positive-electrode sheet for the capacitor is greater than 200 µm, the dry mixing is performed; and when the thickness of the positive-electrode sheet for the capacitor is less than or equal to 200 µm, the wet mixing is performed;
preferably, the method further comprises providing the positive-electrode collector and compounding the positive-electrode material with the positive-electrode collector to form the first active substance layer on at least one side surface of the positive-electrode collector;
preferably, the compounding comprises: heating and compressing the positive-electrode material to a surface of the positive-electrode collector, or processing the positive-electrode material into a positive-electrode paste and then coating the positive-electrode paste on the surface of the positive-electrode collector to form the first active substance layer;
preferably, the heating and compressing is performed at a temperature of 100°C to 200°C; preferably, mixing the positive-electrode material and a solvent to form the positive-electrode paste, and a mass ratio of the positive-electrode material to the solvent is in a range of 0.4 to 0.8.

7. The method according to claim 6, wherein,
when the positive-electrode active material is obtained based on the dry mixing, the heating and compressing is performed for the compounding; and
when the positive-electrode active material is obtained based on the wet mixing, the heating and compressing is performed for compounding, the coating is performed for the compounding.

8. The method according to claim 6, wherein the dry mixing comprises:
mechanically mixing and stirring: the positive-electrode active material, the carbon electrode material, the positive-electrode conductive agent, and the positive-electrode binder, to obtain positive-electrode material dry powders.

9. The method according to claim 8, further comprising:
heating and compressing the positive-electrode material dry powders to obtain a positive-electrode material dry sheet; and
adhering the positive-electrode material dry sheet to the surface of the positive-electrode collector.

10. The method according to claim 6, wherein the wet mixing comprises:
dissolving the positive-electrode binder and a solvent to obtain a positive-electrode paste solution, wherein the solvent comprises: N-methylpyrrolidone or deionized water; and a mass ratio of the positive-electrode dry material to the solvent is in a range of 0.4 to 0.8.

11. The method according to claim 10, further comprising:
mixing positive-electrode conductive agent and the positive-electrode paste solution to obtain a conductive paste solution; and
adding the positive-electrode active material and the carbon electrode material to the conductive paste solution to obtain a positive-electrode paste; and
coating the positive-electrode paste on the surface of the positive-electrode collector.

12. An ultrathin supercapacitor, comprising: a case (6) and an upper cover body (5) that is insulated from and connected to the case (6);
wherein the case (6) and the upper cover body (5) cooperatively define a receiving chamber; the positive-electrode sheet, a separator (3), and a negative-electrode sheet are sequentially laminated inside the receiving chamber; the positive-electrode sheet is connected to the case (6), and the negative-electrode sheet is at least partially connected to the upper cover body (5); the positive-electrode sheet is the positive-electrode sheet for the capacitor according to any one of claims 1 to 4 or is made by performing the method of manufacturing the positive-electrode sheet for the capacitor according to claim 5 or claim 6.

13. The ultrathin supercapacitor according to claim 12, wherein the positive-electrode sheet further comprises: the positive-electrode collector (7), the positive-electrode collector (7) is disposed between the case (6) and the first active substance layer (1);
preferably, an electrolyte is filled to an interior of the case (6);
preferably, the case (6) is connected to the upper cover body (5) via an insulating assembly; and
preferably, the insulating assembly is an insulating rubber ring (4).

14. The ultrathin supercapacitor according to claim 12 or 13, wherein the negative-electrode sheet comprises a second active substance layer (2), the second active substance layer (2) comprises a negative-electrode active material, a negative-electrode conductive agent, and a negative-electrode binder;
preferably, the negative-electrode sheet further comprises a negative-electrode collector (8), the negative-electrode collector (8) is disposed between the upper cover body (5) and the second active substance layer (2);
preferably, the negative-electrode collector (8) comprises any one of: a copper foil, a nickel mesh, an aluminium foil or an aluminium mesh;
preferably, the negative-electrode collector (8) has a thickness of 6µm to 20 µm;
preferably, a total mass of the second active substance layer (2) is recorded as 100%, a mass fraction of the negative-electrode active material is in a range of 80% to 96%;
preferably, a mass fraction of the negative-electrode conductive agent is in a range of 2% to 10%; and
preferably, a mass fraction of the negative-electrode binder is in a range of 2% to 10%;
preferably, the negative-electrode active material comprises lithium titanate and/or a carbon active material;
preferably, the carbon active material comprises any one or a combination of at least two of: graphite, soft carbon, hard carbon, and intermediate-phase carbon microspheres;
preferably, the negative-electrode conductive agent comprises any one or a combination of at least two of: conductive carbon black, carbon nanotubes, graphene or a carbon fibre conductive agent;
preferably, the negative-electrode binder comprises any one or a combination of at least two of: polyvinylidene fluoride, polytetrafluoroethylene, polyacrylic acid, sodium carboxymethylcellulose, and styrene-butadiene rubber.

15. The ultrathin supercapacitor according to any one of claims 12 to 14, wherein the separator (3) comprises a polymer separator, a non-woven separator or a glass fibre separator;
preferably, the case (6) is made of stainless steel;
preferably, the upper cover body (5) is made of stainless steel;
preferably, the insulating assembly is made of any one of: polypropylene, polyphenylene sulfide or polyetheretherketone;
preferably, the electrolyte comprises an organic solvent and a lithium salt;
preferably, the organic solvent comprises a carbonate ester solvent and/or an ether solvent; and
preferably, the lithium salt comprises any one or a combination of at least two of: LiPF₆, LiTFSI, LiFSI, LiBOB or LiBF₄.
